(19) Europäisches Patentamt
European Patent Office
Office européen des brevets

(11) **EP 1 543 696 B1**

(12) **EUROPÄISCHE PATENTSCHRIFT**

(45) Veröffentlichungstag und Bekanntmachung des Hinweises auf die Patenterteilung:
**28.11.2007 Patentblatt 2007/48**

(21) Anmeldenummer: **03753374.2**

(22) Anmeldetag: **01.09.2003**

(51) Int Cl.:
***H04Q 7/38*** *(2006.01)*

(86) Internationale Anmeldenummer:
**PCT/EP2003/009705**

(87) Internationale Veröffentlichungsnummer:
**WO 2004/032550 (15.04.2004 Gazette 2004/16)**

(54) **ANPASSEN DER KOMMUNIKATION ZWISCHEN EINER MOBILSTATION UND EINER ERSTEN BASISSTATION AUF BASIS EINER SCHÄTZUNG DER AN EINER ZWEITEN BASISSTATION DURCH DAS SIGNAL DER MOBILSTATION AUFTRETENDEN STÖRUNG**

ADAPTATION OF THE COMMUNICATION BETWEEN A MOBILE STATION AND A FIRST BASE STATION, BASED ON AN ESTIMATION OF THE INTERFERENCE THAT OCCURS IN A SECOND BASE STATION CAUSED BY THE SIGNAL OF THE MOBILE STATION

ADAPTATION DE LA COMMUNICATION ENTRE UNE STATION MOBILE ET UNE PREMIERE STATION DE BASE SUR LA BASE D'UNE EVALUATION DE LA PERTURBATION SE PRODUISANT DANS UNE DEUXIEME STATION MOBILE ET CAUSEE PAR LE SIGNAL DE LADITE STATION MOBILE

(84) Benannte Vertragsstaaten:
**AT BE BG CH CY CZ DE DK EE ES FI FR GB GR HU IE IT LI LU MC NL PT RO SE SI SK TR**

(30) Priorität: **27.09.2002 DE 10245121**

(43) Veröffentlichungstag der Anmeldung:
**22.06.2005 Patentblatt 2005/25**

(73) Patentinhaber: **NOKIA SIEMENS NETWORKS GMBH & CO. KG**
**81541 München (DE)**

(72) Erfinder:
• **GUSTRAU, Jörg**
**81549 MÜNCHEN (DE)**
• **LAMPRECHT, Frank**
**10439 Berlin (DE)**
• **BREUER, Volker**
**16727 Bötzow (DE)**
• **CHARPENTIER, Frederic**
**10115 Berlin (DE)**

(56) Entgegenhaltungen:
EP-A- 0 530 161            EP-A- 0 975 184
US-A- 4 696 027           US-B1- 6 301 478

• **MIAO QINGYU ET AL: "An investigation of interference between UTRA-TDD and FDD systems" IEEE, Bd. 1, 21. August 2000 (2000-08-21), Seiten 339-346, XP010526772**

**Beschreibung**

Die Erfindung betrifft ein Verfahren zum Betrieb eines Mobilfunksystems mit wenigstens einer ersten und einer zweiten Basisstation, sowie ein entsprechendes Mobilfunksystem und eine Anpassungseinrichtung für ein solches Mobilfunksystem.

In der EP 0 530 161 A1 ist ein kombiniertes Mobilfunksystem beschrieben, bei dem ein erstes und ein zweites Mobilfunksystem einander örtlich überlagert sind. Die beiden Mobilfunksysteme nutzen wenigstens teilweise dasselbe Frequenzband. Eines der beiden Mobilfunksysteme ist lokal und das andere regional. Innerhalb des lokalen Mobilfunksystems wird das Risiko von Störungen des regionalen Mobilfunksystems aufgrund von Übertragungen zwischen Basisstationen und Mobilstationen innerhalb des lokalen Mobilfunksystems geschätzt und abhängig davon gegebenenfalls ein Kanalwechsel innerhalb des lokalen Systems durchgeführt.

Zellulare Mobilfunknetze weisen eine Vielzahl von Funkzellen auf, die in der Regel von jeweils einer Basisstation versorgt werden. Bekannte zellulare Mobilfunknetze basieren auf dem unter anderem in Europa verbreiteten GSM-Standard (Global System of Mobile Communication). Zukünftig wird in Europa für die sogenannte dritte Mobilfunkgeneration der Aufbau von zellularen Netzen nach dem UMTS-FDD-Standard erfolgen (Universal Mobile Telecommunication Standard-Frequency Division Duplex). In Deutschland wurden an die zukünftigen Netzbetreiber der UMTS-FDD-Netze entsprechende Frequenzbänder vergeben. Jeder Netzbetreiber verfügt über ein Frequenzband in der Aufwärtsrichtung (Uplink) und ein Frequenzband für die Abwärtsrichtung (Downlink, sogenannte gepaarte Bänder), und es wird zukünftig möglich sein, ein weiteres (ungepaartes) Frequenzband für die Abwärtsrichtung zu erwerben. Durch die Asymmetrie zukünftiger Datendienste wird nämlich mehr Übertragungskapazität in Abwärtsrichtung benötigt als in Aufwärtsrichtung.

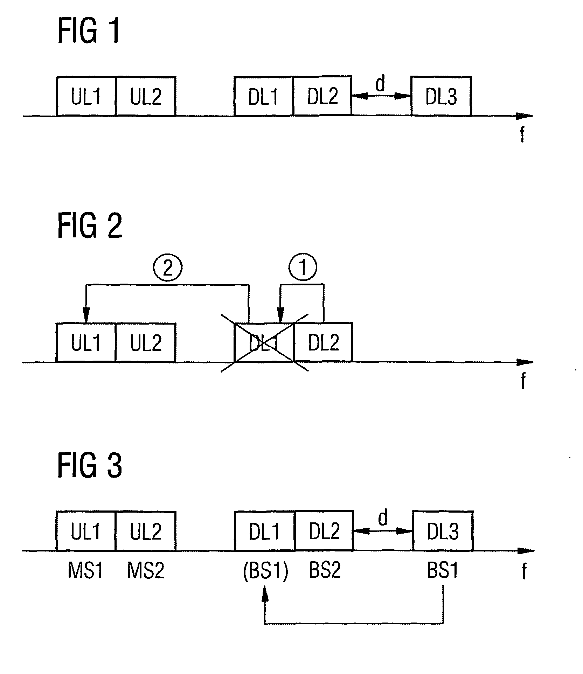

Figur 1 zeigt eine mögliche Anordnung der an zwei unterschiedliche Netzbetreiber vergebenen Frequenzbänder. Dem ersten Netzbetreiber ist ein Frequenzband UL1 für die Aufwärtsrichtung und ein Frequenzband DL1 für die Abwärtsrichtung, sowie ein weiteres Frequenzband DL3 für die Abwärtsrichtung zugeteilt worden. Dem zweiten Netzbetreiber ist ein Frequenzband UL2 für die Aufwärtsrichtung und ein Frequenzband DL2 für die Abwärtsrichtung zugeteilt worden. Jeder Netzbetreiber soll angenommenermaßen jeweils ein flächendeckendes zellulares Mobilfunknetz unter Nutzung der genannten Frequenzbänder betreiben. Unter "Mobilfunksystem" soll im Rahmen dieser Beschreibung ein System verstanden werden, das gegebenenfalls auch mehrere Mobilfunknetze, insbesondere unterschiedlicher Netzbetreiber, aufweisen kann. In diesem Sinne handelt es sich bei den beiden anhand von Figur 1 betrachteten Netzen um ein (gemeinsames) Mobilfunksystem.

Da die in Figur 1 dargestellten Frequenzbänder UL1, UL2 für die Aufwärtsrichtung und die Frequenzbänder DL1, DL2 für die Abwärtsrichtung einen gegenseitigen Bandabstand von nahezu Null aufweisen, das heisst, unmittelbar einander benachbart sind, und Basisstationen der beiden Mobilfunknetze in unmittelbarer Nachbarschaft zueinander angeordnet sein können, kann es zu Störungen von Verbindungen des einen Netzes durch Verbindungen des anderen Netzes kommen. So können Signale, die von einer Teilnehmerstation des ersten Netzes im Frequenzband UL1 zu einer entsprechenden Basisstation des ersten Netzes übertragen werden, zu Störungen bei einer Basisstation des zweiten Netzes hervorrufen, die Signale von anderen Teilnehmerstationen in ihrer Funkzelle im Aufwärtsband UL2 empfängt. Umgekehrt kann es zu Störungen der von der Basisstation des zweiten Netzes im Frequenzband DL2 für die Abwärtsrichtung ausgesendeten Signale bei der Teilnehmerstation des ersten Netzes kommen, die für sie bestimmte Signale eigentlich im Frequenzband DL1 für die Abwärtsrichtung des ersten Netzes empfängt. Da die maximale Sendeleistung einer Basisstation größer als die maximale Sendeleistung einer Teilnehmerstation ist, sind die vorgenannten Störungen zwischen den beiden überlagerten Mobilfunknetzen in der Abwärtsrichtung größer als in der Aufwärtsrichtung.

Figur 2 zeigt, wie sich dieser Umstand im Falle von starken Störeinflüssen auswirkt. Bewegt sich die Teilnehmerstation des ersten Netzes von der Basisstation des ersten Netzes weg, mit der sie kommuniziert, und auf die Basisstation des zweiten Netzes zu, muss sie ihre Sendeleistung erhöhen, so dass es zu Störungen des Frequenzbandes UL2 in Aufwärtsrichtung des zweiten Netzes durch die Aussendungen der Teilnehmerstation im Frequenzband UL1 in Aufwärtsrichtung des ersten Netzes kommt. Gleichzeitig nehmen aber im stärkerem Maße die Störungen der Aussendungen der Basisstation des ersten Netzes im Frequenzband DL1 in Abwärtsrichtung durch die Aussendungen der Basisstation des zweiten Netzes im Frequenzband DL2 in Abwärtsrichtung zu. Im Falle starker Störungen wird auf Grund des stärkeren Störeinflusses in Abwärtsrichtung im Vergleich zur Aufwärtsrichtung zunächst die Signalqualität im Frequenzband DL1 in Abwärtsrichtung des ersten Netzes so sehr beeinträchtigt, dass ein Empfang bei der Teilnehmerstation nicht mehr möglich ist. Dies ist mit der Ziffer 1 in Figur 2 sowie durch das Durchstreichen des Frequenzbandes DL1 in Abwärtsrichtung des ersten Netzes dargestellt. Da bei UMTS-FDD ohne Empfang von Signalen in der Abwärtsrichtung keine Übertragung der Teilnehmerstation zur jeweiligen Basisstation erlaubt ist, erfolgt nach diesem Standard automatisch eine Abschaltung der betreffenden Verbindung auch in der Aufwärtsrichtung im Frequenzband UL1, siehe Ziffer 2 in Figur 2. Auf diese Weise wird verhindert, dass die Aussendungen der Teilnehmerstation im Frequenzband UL1 den Empfang der Basisstation des zweiten Netzes im Frequenzband UL2 für die Aufwärtsrichtung zu stark beeinträchtigt.

Der soeben beschriebene Mechanismus funktioniert jedoch nicht, wenn für die Verbindung mit der Teilnehmerstation im ersten Netz in Abwärtsrichtung nicht das zum Frequenzband UL1 in der Aufwärtsrichtung symmetrische beziehungsweise gepaarte Frequenzband DL1 verwendet wird, sondern das ungepaarte Band DL3 (vergleiche Figur 1). Durch den größeren Bandabstand d zwischen den Frequenzbändern DL2 und DL3 der beiden Netze in der Abwärtsrichtung kommt es nun nicht mehr so leicht zu Störungen zwischen den von den Basisstationen ausgesendeten Signalen. Eine Störung der zwischen den Teilnehmerstationen der unterschiedlichen Netze zu diesen Basisstationen übertragenen Signale, ist auf Grund des geringen Bandabstandes zwischen den beiden Frequenzbändern UL1, UL2 für die Aufwärtsrichtung jedoch weiterhin möglich. Eine Vermeidung dieser Störungen auf die bezüglich Figur 2 erläuterte Art kann daher nicht erfolgen, so dass negative erläuterte Art kann daher nicht erfolgen, so dass negative Einflüsse auf den Betrieb eines solchen Mobilfunksystems, das aus zwei überlagerten Mobilfunknetzen gebildet wird, zu erwarten ist.

Der Erfindung liegt daher die Aufgabe zugrunde, das angesprochene Problem der Störbeeinflussung zwischen von und zu zwei Basisstationen übertragenen Signalen zu vermindern.

Diese Aufgabe wird mit einem Verfahren gemäß Anspruch 1, einem Mobilfunksystem gemäß Anspruch 9 sowie einer Anpassungseinrichtung für ein Mobilfunksystem gemäß Anspruch 10 gelöst. Vorteilhafte Aus- und Weiterbildungen der Erfindung sind Gegenstand von abhängigen Ansprüchen.

Das erfindungsgemäße Verfahren sieht vor, dass zwischen einer Teilnehmerstation und einer ersten Basisstation Signale übertragen werden, dass das Ausmaß einer Störung des Empfangs einer zweiten Basisstation durch die von der Teilnehmerstation zur ersten Basisstation übertragenen Signale geschätzt wird, und dass in dem Fall, dass die geschätzte Störung einen Grenzwert überschreitet, die Übertragung der Signale zwischen der Teilnehmerstation und der ersten Basisstation entsprechend angepasst wird.

Durch die Schätzung des Ausmaßes der Störung ist es möglich, das potentielle Risiko eines beeinträchtigten Betriebes des Mobilfunksystems zu ermitteln. In Abhängigkeit von der geschätzten Störung erfolgt dabei die Anpassung der Kommunikation zwischen der Teilnehmerstation und der ersten Basisstation, wodurch das potentielle Störrisiko reduziert werden kann. Die Anpassung der Kommunikation kann dabei sowohl in Aufwärtsrichtung als auch in Abwärtsrichtung erfolgen. Erfindungsgemäß nimmt die Teilnehmerstation die Schätzung der Störung vor und passt die Übertragung der Signale zur ersten Basisstation selbsttätig an. In diesem Fall entfällt eine netzseitige Steuerung der Anpassung. Es ist jedoch vorteilhaft, wenn die Teilnehmerstation das Netz über die erste Basisstation über die von ihr vorgenommene Anpassung informiert.

Nach einer ersten Ausführungsform der Erfindung wird in dem Fall, dass die Störung den Grenzwert überschreitet, die Sendeleistung der Teilnehmerstation für die Übertragung der Signale zur ersten Basisstation vermindert, das heisst, es erfolgt eine Anpassung der Kommunikation in Aufwärtsrichtung. Bei Übertragungsverfahren mit CDMA-Komponente (Code Division Multiple Access), wie es bei UMTS-FDD zum Einsatz kommt, kann eine Absenkung der Sendeleistung erfolgen und gleichzeitig ein Spreizfaktor für die Spreizung der zu übertragenden Daten mit einem Spreizcode erhöht werden. Weiterhin ist es möglich, bestimmte Transportformatkombinationen, die unter den gegebenen Umständen eine zu hohe Sendeleistung erfordern, für die Aussendung der Signale von der Teilnehmerstation zur ersten Basisstation nicht mehr zuzulassen.

Die Erfindung ist insbesondere dann von Vorteil, wenn in Aufwärtsrichtung für die Kommunikation mit der ersten Basisstation ein erstes Frequenzband und für die Kommunikation mit der zweiten Basisstation ein zweites Frequenzband zur Verfügung stehen, die zueinander einen ersten Bandabstand aufweisen, in Abwärtsrichtung für die Kommunikation mit der ersten Basisstation ein drittes Frequenzband und für die Kommunikation mit der zweiten Basisstation ein viertes Frequenzband zur Verfügung stehen, die zueinander einen zweiten Bandabstand aufweisen, der größer als der erste Bandabstand ist, und die Teilnehmerstation mit der ersten Basisstation unter Nutzung des ersten Frequenzbandes und des dritten Frequenzbandes kommuniziert. Hierbei kann der erste Bandabstand beispielsweise auch Null oder nahezu Null betragen. Bei dieser Konstellation kommt es zu der eingangs erläuterten stärkeren Störbeeinflussung zwischen den Frequenzbändern in Aufwärtsrichtung als zwischen den Bändern in Abwärtsrichtung, da zwischen letzteren der größere Bandabstand besteht.

Nach einer zweiten Ausführungsform der Erfindung steht für die Kommunikation mit der ersten Basisstation in Abwärtsrichtung ein fünftes Frequenzband zur Verfügung, das zum vierten Frequenzband einen geringeren Bandabstand aufweist, als das dritte Frequenzband, wobei dieser geringere Bandabstand beispielsweise auch wieder Null oder nahezu Null betragen kann. In dem Fall, dass die Störung den Grenzwert überschreitet, wird die Übertragung der Signale von der ersten Basisstation zur Teilnehmerstation vom dritten Frequenzband in das fünfte Frequenzband gewechselt. Das bedeutet, dass nach dem Wechsel der Frequenzbänder für die Abwärtsrichtung die in Abwärtsrichtung verwendeten Frequenzbänder einen geringeren Bandabstand aufweisen als zuvor, und somit Störbeeinflussungen zwischen diesen Frequenzbändern zunehmen. Daher wird nun wieder der anhand von Figur 2 beschriebene Effekt auftreten, dass auf Grund einer zu starken Störungen zwischen den Frequenzbändern in Abwärtsrichtung ein Empfang bei der Teilnehmerstation nicht mehr möglich ist und diese hieran erkennt, dass sie die Aussendung der Signale zur ersten Basisstation im ersten Frequenzband abbrechen soll, um den Empfang der zweiten Basisstation nicht zu stark zu beeinträchtigen.

Bei der zweiten Ausführungsform erfolgt also eine Anpassung der Kommunikation zwischen Teilnehmerstation und erster Basisstation für die Abwärtsrichtung.

Nach einer Weiterbildung der Erfindung werden zur Schätzung der Störung des Empfangs der zweiten Basisstation durch die von der Teilnehmerstation zur ersten Basisstation übertragenen Signale von der Teilnehmerstation empfangene Sendesignale der zweiten Basisstation ausgewertet. Eine Auswertung dieser empfangenen Sendesignale reicht für die Schätzung der Störung aus, sofern der Teilnehmerstation die Sendeleistung der zweiten Basisstation für die Aussendung dieser Signale bekannt ist. Dann lässt sich aus der Empfangsleistung an der Teilnehmerstation der sogenannte Pathloss beziehungsweise die Kanaldämpfung und somit die Entfernung zwischen der Teilnehmerstation und der zweiten Basisstation ermitteln.

Eine Weiterbildung der Erfindung sieht vor, dass zur Schätzung der Störung des Empfangs der zweiten Basisstation durch die von der Teilnehmerstation zur ersten Basisstation übertragenen Signale ausserdem die Sendeleistung der Teilnehmerstation für die Übertragung der Signale zur ersten Basisstation berücksichtigt wird. Hierdurch lässt sich das Ausmaß der Störung noch besser abschätzen. Dies ist insbesondere dann von Vorteil, wenn die im vorstehenden Absatz beschriebene Sendeleistung der zweiten Basisstation der Teilnehmerstation nicht bekannt ist. Wie weiter unten noch erläutert wird, lässt sich dann die Störung auch ohne diese Kenntnis ermitteln.

Nach einer Weiterbildung der Erfindung teilt die erste Basisstation der Teilnehmerstation Informationen über durchzuführende Messungen mit, die zur Schätzung der Störung dienen. Dabei kann es sich insbesondere um Zeitpunkte oder Zeitintervalle für die durchzuführenden Messungen und/oder über die von der zweiten Basisstation für die Aussendung ihrer Signale verwendeten Kanalressourcen wie Frequenz, Zeitschlitz oder Spreizcode handeln, die die Teilnehmerstation für die Durchführung der Messungen kennen muss.

Es ist günstig, wenn in dem Fall, dass die geschätzte Störung einen zweiten Grenzwert unterschreitet, die Übertragung der Signale zwischen der Teilnehmerstation und der ersten Basisstation erneut angepasst wird. Dies ermöglicht beispielsweise eine Anhebung der Sendeleistung der Teilnehmerstation, wenn diese bei Überschreiten des ersten Grenzwertes abgesenkt wurde. Wurde dagegen bei Überschreiten des ersten Grenzwertes für die Übertragung in Abwärtsrichtung vom dritten Frequenzband in das fünfte Frequenzband gewechselt, kann dieser Wechsel bei Unterschreiten des zweiten Grenzwertes beispielsweise wieder rückgängig gemacht werden. Das Unterschreiten des zweiten Grenzwertes bedeutet, dass die geschätzte Störung ein so geringes Ausmaß annimmt, dass eine Beeinträchtigung des Betriebs der zweiten Basisstation auch bei Rückgängigmachen der Anpassung der Kommunikation nicht zu befürchten ist.

Das erfindungsgemäße Mobilfunksystem sowie die erfindungsgemäße Anpassungseinrichtung für ein Mobilfunksystem weisen die für die Durchführung des erfindungsgemäßen Verfahrens notwendigen Komponenten auf.

Dabei sind die für die Durchführung der Schätzung und für die Anpassung der Übertragung der Signale zwischen der Teilnehmerstation und der ersten Basisstation notwendigen Einheiten vollständig in der Teilnehmerstation angeordnet.

Die Erfindung wird im Folgenden anhand von in den Figuren dargestellten Ausführungsbeispielen erläutert. Es zeigen:

Figur 1 die Anordnung von Frequenzbändern für die Aufwärtsrichtung und für die Abwärtsrichtung im Frequenzbereich für zwei Mobilfunknetze,

Figur 2 den Einfluss von Störungen zwischen Frequenzbändern aus Figur 1 nach dem Stand der Technik,

Figur 3 die Berücksichtigung von Störungen bei einem Ausführungsbeispiel der Erfindung,

Figur 4 die Berücksichtigung von Störungen bei einem anderen Ausführungsbeispiel der Erfindung,

Figur 5 eine Teilnehmerstation eines ersten Netzes und eine Basisstation eines zweiten Netzes,

Figur 6 jeweils eine Basisstation und eine Teilnehmerstation zweier unterschiedlicher Netze eines Mobilfunksystems und

Figur 7 eine erfindungsgemäße Anpassungseinrichtung für ein Mobilfunksystem.

Auf die Figuren 1 und 2 wurde bereits in der Beschreibungseinleitung eingegangen. Gleiche Bezugszeichen in den Figuren bezeichnen gleiche Gegenstände.

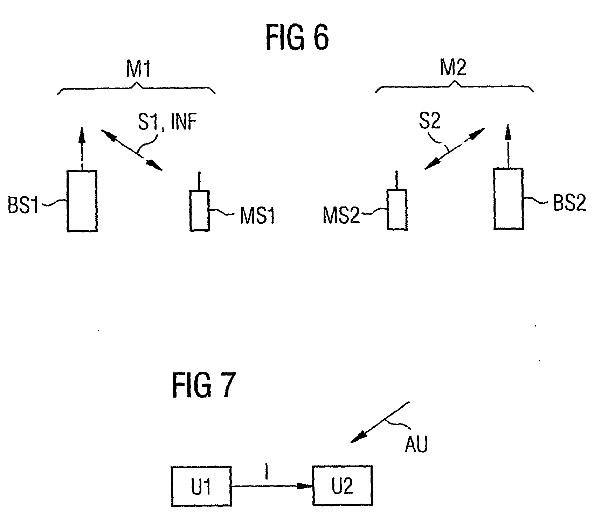

Figur 6 zeigt ausschnittsweise zwei örtlich überlagerte Mobilfunknetze M1, M2 nach dem UMTS-FDD-Standard, die ein Mobilfunksystem im Sinne der Erfindung bilden. Jedes Mobilfunknetz M1, M2 in Figur 6 wird durch einen anderen Netzbetreiber betrieben. Die Erfindung ist selbstverständlich auch anwendbar auf Fälle, in denen beide Mobilfunknetze M1, M2 durch denselben Netzbetreiber betrieben werden. Weiterhin ist die Erfindung auch auf Mobilfunksysteme anwendbar, die lediglich ein einzelnes Mobilfunknetz beinhalten. Dann sind die beiden Basisstationen BS1, BS2 Bestandteil desselben Mobilfunknetzes.

Das erste Mobilfunknetz M1 in Figur 6 weist eine erste Basisstation BS1 und eine erste Teilnehmerstation MS1 auf, die miteinander kommunizieren, indem sie erste Signale S1 miteinander austauschen. Das zweite Mobilfunknetz M2 weist eine zweite Basisstation BS2, sowie eine zweite Teilnehmerstation MS2 auf, die zweite Signale S2 miteinander austauschen.

Figur 3 zeigt eine der Figur 1 entsprechende Darstellung von für die Übertragung der Signale S1 S2 in Figur 6 genutzten Frequenzbändern. Dabei sind die Frequenzbänder UL1, DL1 und DL3 dem Betreiber des ersten Mobilfunknetzes M1 und die Frequenzbänder UL2 und DL2 dem Betreiber des zweiten Mobilfunknetzes M2 zugeteilt. Für die Kommunikation zwischen der ersten Teilnehmerstation MS1 und der ersten Basisstation BS1 wird in Aufwärtsrichtung das Frequenzband UL1 und in Abwärtsrichtung zunächst das Frequenzband DL3 genutzt. Für die Kommunikation zwischen der zweiten Teilnehmerstation MS2 und der zweiten Basisstation BS2 wird in Aufwärtsrichtung das Frequenzband UL2 und in Abwärtsrichtung das Frequenzband DL2 genutzt. Zur Schätzung des Ausmaßes einer Störung des Aufwärts-Frequenzbandes UL2 des zweiten Netzes M2 durch die Aussendungen der ersten Teilnehmerstation MS1 im Aufwärts-Frequenzband UL1 des ersten Netzes M1 teilt die erste Basisstation BS1 der ersten Teilnehmerstation MS1 über Informationen INF (siehe Figur 6) mit, periodisch Messungen der von der zweiten Basisstation BS2 ausgesandten zweiten Signale S2 durchzuführen. Dabei werden zweite Signale S2 untersucht, die in einem Broadcastkanal von der zweiten Basisstation BS2 ausgesendet werden. Hierfür eignet sich insbesondere der CPICH (Common Pilot Channel) nach dem UMTS-FDD-Standard.

Weiterhin ermittelt die erste Teilnehmerstation MS1 ihre eigene Sendeleistung, mit der sie die ersten Signale S1 zur ersten Basisstation BS1 überträgt. Auch dies fließt in die Schätzung der Störung ein, wie nachfolgend noch genauer erläutert wird. Hier wird zunächst nur betrachtet, welche Maßnahmen ergriffen werden, wenn eine zu starke geschätzte Störung ermittelt wird.

Gemäß Figur 3 wird in diesem Fall das Frequenzband für die Abwärtsrichtung für die Verbindung der ersten Teilnehmerstation MS1 und der ersten Basisstation BS1 von DL3 nach DL1 gewechselt (siehe Pfeil in Figur 3). Hierdurch wird erreicht, dass sich tatsächliche Störungen in Abwärtsrichtung zwischen den Frequenzbändern DL1 und DL2 der beiden Netze M1, M2 frühzeitig auf die Empfangsqualität bei der ersten Teilnehmerstation MS1 auswirken. Sobald derartige Störungen zu groß werden und ein Empfang durch die erste Teilnehmerstation MS1 verhindert wird, ist eine Synchronisierung der ersten Teilnehmerstation MS1 auf die erste Basisstation BS1 nicht mehr möglich und die erste Teilnehmerstation MS1 unterbricht ihre Aussendungen der ersten Signale S1, entsprechend den obigen Erklärungen zu Figur 2.

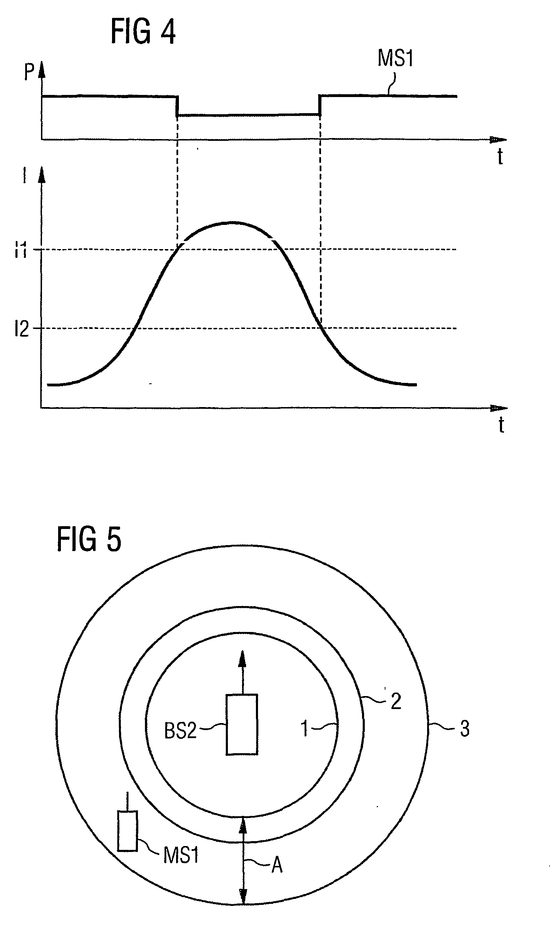

Figur 4 zeigt im unteren Teil die durch die erste Teilnehmerstation MS1 an der zweiten Basisstation BS2 erzeugte Störung I, die auf einer Schätzung beruht, aufgetragen über der Zeit t. Im hier betrachteten Fall steigt zunächst die geschätzte Störung I solange an, bis ein erster Grenzwert I1 überschritten wird. Hierdurch wird die anhand von Figur 3 soeben erläuterte Anpassung der Kommunikation zwischen der ersten Teilnehmerstation MS1 und der ersten Basisstation BS1 ausgelöst. Erfolgt ein weiterer Anstieg der Störung I durch Aussendung des ersten Signals S1, so würde der Empfang der ersten Teilnehmerstation MS1 im Band DL1 durch die Aussendung der zweiten Signale S2 der zweiten Basisstation BS2 im Band DL2 stärker gestört, was zu einer Unterbrechung der Aussendung der ersten Signale S1 führen würde, gemäß Figur 2. Hierdurch wird die Störung I durch die erste Teilnehmerstation MS1 beendet. Sobald die geschätzte Störung I einen zweiten Grenzwert 12, der kleiner als der erste Grenzwert I1 ist, bei anderen Ausführungsbeispielen der Erfindung jedoch mit diesem übereinstimmen kann, unterschreitet, erfolgt wiederum ein Wechsel der Übertragung in Abwärtsrichtung zwischen der ersten Basisstation BS1 und der ersten Teilnehmerstation MS1 vom Frequenzband DL1 zum Frequenzband DL3, das heisst, die Anpassung der Übertragung der ersten Signale S1 wird wieder rückgängig gemacht.

Im oberen Teil der Figur 4 ist für ein anderes Ausführungsbeispiel der Erfindung die Sendeleistung P der ersten Teilnehmerstation MS1 über der Zeit t aufgetragen. Dies ist die Sendeleistung, mit der die erste Teilnehmerstation MS1 die ersten Signale S1 in Aufwärtsrichtung zur ersten Basisstation BS1 überträgt. Bei diesem Ausführungsbeispiel erfolgt eine Absenkung der Sendeleistung P, sobald der erste Grenzwert I1 durch die geschätzte Störung I überschritten wird. Bei Unterschreiten des zweiten Grenzwertes I2 wird die Sendeleistung P wieder erhöht. Dabei wird zur Beibehaltung der Empfangsqualität an der ersten Basisstation BS1 gleichzeitig mit der Absenkung der Sendeleistung P ein Spreizfaktor für die Spreizung der ersten Signale S1 durch die erste Teilnehmerstation MS1 erhöht. Bei Anhebung der Sendeleistung P wird der Spreizfaktor wieder entsprechend erniedrigt.

Figur 5 zeigt eine Darstellung der relativen Position der ersten Teilnehmerstation MS1 zur zweiten Basisstation BS2. Dabei wird angenommen, dass die erste Basisstation BS1 sich nicht an derselben Position wie die zweite Basisstation BS2 befindet und die Sendeleistung P der ersten Teilnehmerstation MS1 konstant gehalten wird. Der innere Kreis 1 in Figur 5 umschließt den Bereich, in dem die erste Teilnehmerstation MS1 tatsächlich eine unzulässige Störung der zweiten Basisstation BS2 verursachen würde. Der mittlere Kreis 2 umschließt das Gebiet, in dem zu erwarten ist, dass durch die Aussendungen der zweiten Basisstation BS2 der Empfang der ersten Teilnehmerstation MS1 tatsächlich in unzulässiger Weise gestört wird. Der größte Kreis 3 bezeichnet die Grenze, innerhalb derer die erfindungsgemäß geschätzte Störung I so große Werte annimmt, dass die beschriebene Anpassung der Kommunikation zwischen der ersten Teilnehmerstation MS1 und der ersten Basisstation BS1 durchgeführt wird. Der Figur 5 ist ein Sicherheitsabstand A zwischen dem inneren Kreis 1 und dem äußeren Kreis 3 zu entnehmen, der dadurch zustande kommt, dass das Ausmaß der tatsächlichen störung erfindungsgemäß nur geschätzt wird. Eine durch Überschreiten des ersten Grenzwertes I1 durch die geschätzte Störung I ausgelöste Anpassung der Übertragung der ersten Signale S1 kann daher unter Umständen erfolgen, wenn die tatsächliche Störung weitaus geringere Werte annimmt als die geschätzte Störung I. Dies muss jedoch wegen der möglichen Ungenauigkeiten bei der Durchführung der Schätzung der Störung in Kauf genommen werden.

Die Ungenauigkeit der Schätzung der Störung beruht darauf, dass sowohl die Messungen der zweiten Signale S2 durch die erste Teilnehmerstation MS1, als auch die Ermittlung der eigenen Sendeleistung P der ersten Teilnehmerstation MS1 fehlerbehaftet ist. Weiterhin wird aus den in Abwärtsrichtung im Frequenzband DL2 durch die zweite Basisstation BS2 übertragenen zweiten Signalen S2 auf die Störungen in Aufwärtsrichtung geschlossen. Da jedoch die Kanaleigenschaften in Abwärts- und Aufwärtsrichtung voneinander abweichen können, können sich weitere Abweichungen zwischen geschätzter Störung und tatsächlicher Störung ergeben. Insgesamt führen die Einflüsse dazu, dass der erste Grenzwert I1 oberhalb des zulässigen Grenzwertes für die tatsächlich vorliegende Störung liegen sollte.

Figur 7 zeigt eine Anpassungseinrichtung AU des Mobilfunksystems aus Figur 6. Sie weist eine Einheit U1 zum Schätzen des Ausmaßes der Störung I des Empfangs der zweiten Basisstation BS2 durch die von der ersten Teilnehmerstation zur ersten Basisstation BS1 übertragenen Signale S1 auf. Weiterhin weist die Anpassungseinrichtung AU eine Einheit U2 zum Anpassen der Übertragung der Signale S1 zwischen der Teilnehmerstation MS1 und der ersten Basisstation BS1 nach einem der anhand Figur 3 und 4 oben erklärten Ausführungsbeispiele in dem Fall auf, dass die geschätzte Störung I den Grenzwert I1 überschreitet. Beim hier betrachteten Ausführungsbeispiel ist die erste Einheit U1 in der ersten Teilnehmerstation MS1 angeordnet, während die zweite Einheit U2 in der ersten Basisstation BS1 angeordnet ist. Gemäß Figur 7 übermittelt die erste Einheit U1 die geschätzte Störung I an die zweite Einheit U2. Dies erfolgt beim hier betrachteten Ausführungsbeispiel mit der Übertragung der ersten Signale S1

Im Folgenden wird gezeigt, dass durch Berücksichtigung der aktuellen Sendeleistung P der ersten Teilnehmerstation MS1 und der Empfangsleistung der zweiten Signale S2 an der ersten Teilnehmerstation MS1 keine Kenntnis der von der zweiten Basisstation BS2 für die Aussendung der zweiten Signale S2 verwendeten Sendeleistung erforderlich ist. Vorausgesetzt wird, dass es sich bei den zweiten Signalen S2 um die Aussendungen auf dem CPICH (Common Pilot Channel) des UMTS-FDD-Standards handelt. Als Störung I wird im Folgenden die Interferenz in dBm betrachtet. Für diese gilt

$$I = P - ACLR - X + AG,$$

wobei P die Sendeleistung der ersten Teilnehmerstation MS1 für Aussendung der ersten Signale S1, ACLR die sogenannte Adjacent Channel Leakage Ratio, X die Kanaldämpfung (Pathloss) zwischen der ersten Teilnehmerstation MS1 und der zweiten Basisstation BS2, sowie AG der Antennengewinn der Empfangsantenne der zweiten Basisstation BS2 ist. Für den Kanalverlust gilt weiterhin die Beziehung

$$X = CP_{TX} + AG - CP_{RX},$$

wobei $CP_{TX}$ die Sendeleistung der zweiten Basisstation auf dem CPICH und $CP_{RX}$ die Empfangsleistung des CPICH an der ersten Teilnehmerstation MS1 ist. Setzt man nun die zweite in die erste Gleichung ein, ergibt sich

$$I = P - ACLR + CP_{RX} - CP_{TX}.$$

Die Störung I muss immer kleiner sein als die maximal zulässige Störung $I_A$, also

$$I < I_A.$$

Somit ergibt sich durch eine Umformung

$$I_A + CP_{TX} + ACLR > P + CP_{RX}.$$

$I_A$ und ACLR sind für UMTS-FDD im Standard festgelegte Konstanten. Für $CP_{TX}$ sind im Standard typische Werte angegeben, von denen in der Praxis nur geringfügig abgewichen werden wird, so dass derartige Abweichungen im Folgenden vernachlässigt werden können.

Die letzte Ungleichung besagt, dass es zur Feststellung einer unzulässigen Störung ausreicht, lediglich die Sendeleistung P der ersten Teilnehmerstation MS1 und die Empfangsleistung $CT_{RX}$ der zweiten Signale S2 an der ersten Teilnehmerstation MS1 zu addieren und mit einer Konstanten zu vergleichen. Der UMTS-FDD-Standard gibt folgende Werte für die Konstanten und den typischen Wert für $CP_{TX}$ vor:

$$ACLR = 33dB, \quad I_A = -110dBm \quad und \quad CP_{TX} = 33dBm.$$

$$\text{Hieraus folgt } I_A + CP_{TX} + ACLR = -77dBm.$$

Die Werte für $I_A$ und $CP_{TX}$ gelten für sogenannte Makrobasisstationen, die zur Versorgung von großen Funkzellen verwendet werden. Der Wert für ACLR gilt für alle Teilnehmerstationen bezüglich der im Frequenzbereich direkt benachbarten Frequenzbänder gemäß dem FDD-Standard (ETSI/TS 25.101). In diese Gleichung wird der $CP_{TX}$-Wert als dB-Wert eingesetzt also 33dB statt 33dBm.

Für Mikrobasisstationen, die zur Versorgung sehr kleiner Funkzellen vorgesehen sind, gilt:

$$I_A = -98dBm \quad und \quad CP_{TX} = 23dBm.$$

$$\text{Hieraus ergibt sich } I_A + CP_{TX} + ACLR = -75dBm.$$

Wegen der nur geringen Abweichung zwischen den Summen dieser Konstanten kann also insgesamt ein zulässiger Grenzwert für die Summe aus P und $CP_{RX}$ von -77dBm angenommen werden, ohne dass unterschieden werden müsste, ob die zweite Basisstation BS2 eine Mikrobasisstation oder eine Makrobasisstation ist (für die Bildung der Summe aus P und $CP_{RX}$ wird $CP_{RX}$ wieder als dB-Wert behandelt). Daher ist es irrelevant, mit welcher Sendeleistung die zweite Basisstation BS2 die zweiten Signale S2 auf dem CPICH aussendet.

Auf Grund des bezüglich Figur 5 erläuterten Sicherheitsabstands A ist es erforderlich, diesen Grenzwert zu reduzieren. Typische Werte für diese Reduktion sind ca. 15 bis 20 dB, so dass der Grenzwert auf -57 bis -62 dBm festgelegt werden kann.

**Patentansprüche**

1. Verfahren zum Betrieb eines Mobilfunksystems mit wenigstens einer ersten und einer zweiten Basisstation (BS1, BS2), bei dem

   - zwischen einer Teilnehmerstation (MS1) und der ersten Basisstation (BS1) Signale (S1) übertragen werden,
   - das Ausmaß einer Störung (I) des Empfangs der zweiten Basisstation (BS2) durch die von der Teilnehmerstation (MS1) zur ersten Basisstation (BS1) übertragenen Signale (S1) geschätzt wird
   - und in dem Fall, dass die geschätzte Störung (I) einen Grenzwert (I1) überschreitet, die Übertragung der Signale (S1) zwischen der Teilnehmerstation (MS1) und der ersten Basisstation (BS1) entsprechend angepasst wird,

   **dadurch gekennzeichnet,**

- **dass** die Teilnehmerstation (MS1) die Schätzung der Störung (I) durchführt und selbsttätig die Übertragung der Signale (S1) zur ersten Basisstation (BS1) anpasst.

2. Verfahren nach Anspruch 1, bei dem

   - in Aufwärtsrichtung für die Kommunikation mit der ersten Basisstation (BS1) ein erstes Frequenzband (UL1) und für die Kommunikation mit der zweiten Basisstation (BS2) ein zweites Frequenzband (UL2) zur Verfügung stehen, die zueinander einen ersten Bandabstand aufweisen,
   - in Abwärtsrichtung für die Kommunikation mit der ersten Basisstation (BS1) ein drittes Frequenzband (DL3) und für die Kommunikation mit der zweiten Basisstation (BS2) ein viertes Frequenzband (DL2) zur Verfügung stehen, die zueinander einen zweiten Bandabstand (d) aufweisen, der größer als der erste Bandabstand ist,
   - und die Teilnehmerstation (MS1) mit der ersten Basisstation (BS1) unter Nutzung des ersten Frequenzbands (UL1) und des dritten Frequenzbands (DL3) kommuniziert.

3. Verfahren nach Anspruch 2, bei dem

   - für die Kommunikation mit der ersten Basisstation (BS1) in Abwärtsrichtung ein fünftes Frequenzband (DL1) zur Verfügung steht, das zum vierten Frequenzband (DL2) einen geringeren Bandabstand aufweist, als das dritte Frequenzband (DL3),
   - und in dem Fall, dass die Störung (I) den Grenzwert (I1) überschreitet, die Übertragung der Signale (S1) von der ersten Basisstation (BS1) zur Teilnehmerstation (MS1) vom dritten Frequenzband (DL3) in das fünfte Frequenzband (DL1) gewechselt wird.

4. Verfahren nach Anspruch 1 oder 2, bei dem in dem Fall, dass die Störung (I) den Grenzwert (I1) überschreitet, die Sendeleistung (P) der Teilnehmerstation (MS1) für die Übertragung der Signale (S1) zur ersten Basisstation (BS1) vermindert wird.

5. Verfahren nach einem der vorstehenden Ansprüche, bei dem zur Schätzung der Störung (I) des Empfangs der zweiten Basisstation (BS2) durch die von der Teilnehmerstation (MS1) zur ersten Basisstation (BS1) übertragenen Signale (S1) von der Teilnehmerstation (MS1) empfangene Sendesignale (S2) der zweiten Basisstation (BS2) ausgewertet werden.

6. Verfahren nach Anspruch 5, bei dem zur Schätzung der Störung (I) des Empfangs der zweiten Basisstation (BS2) durch die von der Teilnehmerstation (MS1) zur ersten Basisstation (BS1) übertragenen Signale (S1) außerdem die Sendeleistung (P) der Teilnehmerstation (MS1) für die Übertragung der Signale (S1) zur ersten Basisstation (BS1) berücksichtigt wird.

7. Verfahren nach einem der vorstehenden Ansprüche, bei dem die erste Basisstation (BS1) der Teilnehmerstation (MS1) Informationen (INF) über durchzuführende Messungen mitteilt, die zur Schätzung der Störung (I) dienen.

8. Verfahren nach einem der vorstehenden Ansprüche, bei dem in dem Fall, dass die geschätzte Störung (I) einen zweiten Grenzwert (12) unterschreitet, die Übertragung der Signale (S1) zwischen der Teilnehmerstation (MS1) und der ersten Basisstation (BS1) erneut angepasst wird.

9. Mobilfunksystem

   - mit wenigstens einer ersten und einer zweiten Basisstation (BS1, BS2) und einer Teilnehmerstation (MS1),

   **gekennzeichnet durch**

   - eine Einheit (U1) der Teilnehmerstation (MS1) zum Schätzen des Ausmaßes einer Störung (I) des Empfangs der zweiten Basisstation (BS2) **durch** von der Teilnehmerstation (MS1) zur ersten Basisstation (BS1) übertragene Signale (S1)
   - und eine Einheit (U2) der Teilnehmerstation (MS1) zum selbsttätigen Anpassen der Übertragung der Signale (S1) zwischen der Teilnehmerstation (MS1) und der ersten Basisstation (BS1) in dem Fall, dass die geschätzte Störung (I) einen Grenzwert (I1) überschreitet.

10. Anpassungseinrichtung (AU) für ein Mobilfunksystem mit wenigstens einer ersten und einer zweiten Basisstation (BS1, BS2), und einer Teilnehmerstation (MS1),
**gekennzeichnet durch**

- eine Einheit (U1) der Teilnehmerstation (MS1) zum Schätzen des Ausmaßes einer Störung (I) des Empfangs der zweiten Basisstation (BS2) **durch** von der Teilnehmerstation (MS1) zur ersten Basisstation (BS1) übertragene Signale (S1)
- und eine Einheit (U2) der Teilnehmerstation (MS1) zum selbsttätigen Anpassen der Übertragung der Signale (S1) zwischen der Teilnehmerstation (MS1) und der ersten Basisstation (BS1) in dem Fall, dass die geschätzte Störung (I) einen Grenzwert (I1) überschreitet.

**Claims**

1. Method for operating a mobile radio system comprising at least one first and one second base station (BS1, BS2), wherein

   - signals (S1) are transmitted between a subscriber station (MS1) and the first base station (BS1),
   - the extent of interference (I) in the reception of the second base station (BS2) as a result of the signals (S1) transmitted from the subscriber station (MS1) to the first base station (BS1) is estimated
   - and in the event that the estimated interference (I) exceeds a threshold value (I1), the transmission of signals (S1) between the subscriber station (MS1) and the first base station (BS1) is accordingly adapted,

   **characterised in that**

   - the subscriber station (MS1) carries out the estimation of the interference (I) and automatically adapts the transmission of the signals (S1) to the first base station (BS1).

2. Method according to claim 1, wherein

   - on the uplink, for the communication with the first base station (BS1) a first frequency band (UL1) is available and for the communication with the second base station (BS2) a second frequency band (UL2) is available, which have a first band spacing relative to one another,
   - on the downlink, for the communication with the first base station (BS1) a third frequency band (DL3) is available and the for the communication with the second base station (BS2) a fourth frequency band (DL2) is available, which have a second band spacing (d) relative to one another which is larger than the first band spacing,
   - and the subscriber station (MS1) communicates with the first base station (BS1) by using the first frequency band (UL1) and the third frequency band (DL3).

3. Method according to claim 2, wherein

   - for the communication with the first base station (BS1) on the downlink a fifth frequency band (DL1) is available, which has a smaller band spacing relative to the fourth frequency band (DL2), than the third frequency band (DL3),
   - and in the event that the interference (I) exceeds the threshold value (I1), the transmission of the signals (S1) from the first base station (BS1) to the subscriber station (MS1) is changed from the third frequency band (DL3) into the fifth frequency band (DL1).

4. Method according to claim 1 or 2, wherein in the event that the interference (I) exceeds the threshold value (I1), the transmitting power (P) of the subscriber station (MS1) for the transmission of signals (S1) to the first base station (BS1) is reduced.

5. Method according to one of the preceding claims, wherein for estimating the interference (I) in the reception of the second base station (BS2) as a result of the signals (S1) transmitted from the subscriber station (MS1) to the first base station (BS1), transmitted signals (S2) of the second base station (BS2) received by the subscriber station (MS1) are evaluated.

6. Method according to claim 5, wherein for estimating the interference (I) in the reception of the second base station (BS2) as a result of the signals (S1) transmitted from the subscriber station (MS1) to the first base station (BS1), the transmitting power (P) of the subscriber station (MS1) is further considered for the transmission of signals (S1) to the first base station (BS1).

7. Method according to one of the preceding claims, wherein the first base station (BS1) of the subscriber station (MS1) communicates information (INF) about measurements to be carried out which serve to estimate the interference (I).

8. Method according to one of the preceding claims, wherein in the event that the estimated interference (I) falls below a second threshold value (I2), the transmission of the signals (S1) between the subscriber station (MS1) and the first base station (BS1) is again adapted.

9. Mobile radio system

   - comprising at least one first and one second base station (BS1, BS2) and a subscriber station (MS1),

   **characterised by**

   - a unit (U1) of the subscriber station (MS1) for estimating the extent of interference (I) in the reception of the second base station (BS2) as a result of signals (S1) transmitted from the subscriber station (MS1) to the first base station (BS1)
   - and a unit (U2) of the subscriber station (MS1) for the automatic adaptation of the transmission of the signals (S1) between the subscriber station (MS1) and the first base station (BS1) in the event that the estimated interference (I) exceeds a threshold value (I1).

10. Adaptation device (AU) for a mobile radio system comprising at least one first and one second base station (BS1, BS2) and a subscriber station (MS1),
    **characterised by**

    - a unit (U1) of the subscriber station (MS1) for estimating the extent of interference (I) in the reception of the second base station (BS2) as a result of signals (S1) transmitted from the subscriber station (MS1) to the first base station (BS1)
    - and a unit (U2) of the subscriber station (MS1) for the automatic adaptation of the transmission of the signals (S1) between the subscriber station (MS1) and the first base station (BS1) in the event that the estimated interference (I) exceeds a threshold value (I1).

**Revendications**

1. Procédé pour exploiter un système de téléphonie mobile comprenant au moins une première et une seconde stations de base (BS1, BS2), dans lequel

   - des signaux (S1) sont transmis entre une station d'abonné (MS1) et la première station de base (BS1),
   - l'importance d'une perturbation (I) de la réception de la seconde station de base (BS2) par des signaux (S1) transmis de la station d'abonné (MS1) à la première station de base (BS1) est évaluée
   - et dans le cas où la perturbation (I) évaluée dépasse une valeur limite (I1), la transmission des signaux (S1) entre la station d'abonné (MS1) et la première station de base (BS1) est adaptée en conséquence,

   **caractérisé en ce que**

   - la station d'abonné (MS1) effectue l'évaluation de la perturbation (I) et adapte automatiquement la transmission des signaux (S1) à la première station de base (BS1).

2. Procédé selon la revendication 1, dans lequel

   - dans le sens ascendant, on dispose d'une première bande de fréquence (UL1) pour la communication avec la première station de base (BS1) et d'une seconde bande de fréquence (UL2) pour la communication avec la seconde station de base (BS2), lesquelles bandes présentent entre elles un premier espacement de bande,
   - dans le sens descendant, on dispose d'une troisième bande de fréquence (DL3) pour la communication avec la première station de base (DS1) et d'une quatrième bande de fréquence (DL2) pour la communication avec la seconde station de base (BS2), lesquelles bandes présentent entre elles un second espacement de bande (d) qui est supérieur au premier espacement de bande,
- et la station d'abonné (MS1) communique avec la première station de base (BS1) en utilisant la première bande de fréquence (UL1) et la troisième bande de fréquence (DL3).

3. Procédé selon la revendication 2, dans lequel

- on dispose, pour la communication avec la première station de base (BS1) dans le sens descendant, d'une cinquième bande de fréquence (DL1) qui présente par rapport à la quatrième bande de fréquence (DL2) un espacement de bande plus faible que la troisième bande de fréquence (DL3),
- et dans le cas où la perturbation (I) dépasse la valeur limite (I1), la transmission des signaux (S1) de la première station de base (BS1) à la station d'abonné (MS1) passe de la troisième bande de fréquence (DL3) à la cinquième bande de fréquence (DL1).

4. Procédé selon la revendication 1 ou 2, dans lequel,
dans le cas où la perturbation (I) dépasse la valeur limite (I1), la puissance d'émission (P) de la station d'abonné (MS1) pour la transmission des signaux (S1) à la première station de base (BS1) est réduite.

5. Procédé selon l'une quelconque des revendications précédentes, dans lequel,
pour l'évaluation de la perturbation (I) de la réception de la seconde station de base (BS2) par les signaux (S1) transmis de la station d'abonné (MS1) à la première station de base (BS1), on évalue des signaux d'émission (S2) reçus de la station d'abonné (MS1), de la seconde station de base (BS2).

6. Procédé selon la revendication 5, dans lequel,
pour l'évaluation de la perturbation (I) de la réception de la seconde station de base (BS2) par les signaux (S1) transmis de la station d'abonné (MS1) à la première station de base (BS1), on prend en compte également la puissance d'émission (P) de la station d'abonné (MS1) pour la transmission des signaux (S1) à la première station de base (BS1).

7. Procédé selon l'une quelconque des revendications précédentes, dans lequel
la première station de base (BS1) communique à la station d'abonné (MS1) des informations (INF) concernant des mesures à effectuer qui servent à évaluer la perturbation (I).

8. Procédé selon l'une quelconque des revendications précédentes, dans lequel,
dans le cas où la perturbation (I) évaluée est inférieure à une seconde valeur limite (I2), la transmission des signaux (S1) entre la station d'abonné (MS1) et la première station de base (BS1) est à nouveau adaptée.

9. Système de téléphonie mobile

- comprenant au moins une première et une seconde stations de base (BS1, BS2) et une station d'abonné (MS1),

**caractérisé par**

- une unité (U1) de la station d'abonné (MS1) pour l'évaluation de l'importance d'une perturbation (I) de la réception de la seconde station de base (BS2) par des signaux (S1) transmis de la station d'abonné (MS1) à la première station de base (BS1)
- et une unité (U2) de la station d'abonné (MS1) pour l'adaptation automatique de la transmission des signaux (S1) entre la station d'abonné (MS1) et la première station de base (BS1) dans le cas où la perturbation (I) évaluée dépasse une valeur limite (I1).

10. Dispositif d'adaptation (AU) pour un système de téléphonie mobile comprenant au moins une première et une seconde station de base (BS1, BS2), et une station d'abonné (MS1),
**caractérisé par**

- une unité (U1) de la station d'abonné (MS1) pour l'évaluation de l'importance d'une perturbation (I) de la réception de la seconde station de base (BS2), par des signaux (S1) transmis de la station d'abonné (MS1) à la première station de base (BS1)
- et une unité (U2) de la station d'abonné (MS1) pour l'adaptation automatique de la transmission des signaux (S1) entre la station d'abonné (MS1) et la première station de base (BS1) dans le cas où la perturbation (I) évaluée dépasse une valeur limite (I1).

## FIG 1

| UL1 | UL2 | | DL1 | DL2 | ←d→ | DL3 | → f |

## FIG 2

② ①

| UL1 | UL2 | | ~~DL1~~ | DL2 | → f |

## FIG 3

| UL1 | UL2 | | DL1 | DL2 | ←d→ | DL3 | → f |
| MS1 | MS2 | | (BS1) | BS2 | | BS1 | |

## FIG 4

## FIG 5

## FIG 6

M1

S1, INF

BS1

MS1

M2

S2

MS2

BS2

## FIG 7

AU

| U1 | I | U2 |

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 0530161 A1